# EUROPÄISCHE PATENTANMELDUNG

(11) **EP 4 422 056 A1**
(43) Veröffentlichungstag der Anmeldung: **28.08.2024**
(21) Anmeldenummer: 24000014.1
(22) Anmeldetag: 05.02.2024
(51) Int. Cl.: H02M 3/158, H02M 7/12, H02M 3/00, H02M 1/00, H02M 1/42, H02M 1/34

(54) **VORRICHTUNG UND VERFAHREN ZUR REDUKTION VON SCHALTVERLUSTEN IN LEISTUNGSELEKTRONISCHEN WANDLERN**

(30) Priorität: 23.02.2023 DE 102023000650
(71) Anmelder: Finepower Gmbh, 85737 Ismaning (DE)
(72) Erfinder: Heiland, Georg, 85737 Ismaning (DE); Jäger, Karl, 86971 Peiting (DE)

(57) **Zusammenfassung**

Vorgeschlagen wird eine Vorrichtung zur Reduktion der Schaltverluste von Halbleiterbauelementen in leistungselektronischen Wandlern. Die Vorrichtung weist zumindest vier Halbleiterbauelemente sowie eine Induktivität auf und wird mit einer leistungselektronischen Schaltung zur Energiewandlung verbunden, wobei zumindest zwei der vier Halbleiterbauelemente als aktive Schaltelemente ausgeführt sind. Dabei werden ein erstes und ein zweites aktives Halbleiterbauelement und die Induktivität erfindungsgemäß elektrisch miteinander in Reihe geschaltet, wodurch sich eine erste Reihenschaltung ergibt, welche dann elektrisch parallel mit zumindest einer Induktivität der leistungselektronischen Schaltung, insbesondere einer Speicherinduktivität in Hochsetzsteller- oder Tiefsetzstellerschaltungen, verbunden wird. Leistungselektronische Schaltungen, mit welchen die vorgeschlagene Vorrichtung in besonders vorteilhafter Weise verbunden werden kann, sind beispielweise Hochsetzsteller- oder Tiefsetzstellerschaltungen, oder eine Kombination aus diesen Schaltungen, wie beispielsweise ein 4-Quadranten-Steller. Die vorgeschlagene Vorrichtung kann aber in unterschiedlichen Ausgestaltungen, welche ebenfalls offenbart werden, auch in resonanten Schaltungstopologien, wie beispielsweise Serienresonanz- oder Parallelresonanzschaltungen, oder einer Kombination aus diesen, eingesetzt werden, wenn diese in ungünstigen Betriebspunkten betrieben werden müssen, beispielsweise unterresonant angesteuert werden. Insbesondere kann die vorgeschlagene Vorrichtung auch in sogenannten LLC-Topologien sowie in phasengesteuerten Spannungswandlertopologien, wie der sogenannten Phase-Shifter-Topologie oder der Dual-Active-Bridge-Topologie, eingesetzt werden.

## Beschreibung

Die Erfindung betrifft leistungselektronische Schaltungen, welche eine erfindungsgemäße Vorrichtung aufweisen sowie mehrere Verfahren zum Betrieb der vorgeschlagenen Vorrichtung.

Leistungselektronische Schaltungen sind notwendig für eine regelbare elektrische Energieversorgung von elektrischen Verbrauchern. Dabei werden üblicherweise eines oder mehrere aktive Halbleiterbauelemente, üblicherweise Schaltelemente wie Transistoren oder Thyristoren, mit Kondensatoren und Induktivitäten zu einem elektrischen Schaltkreis verbunden und in einer jeweils adäquaten Weise mit zeit- und frequenzvariablen Signalen gesteuert. Durch die Ausgestaltung der Schaltkreise ergeben sich unterschiedliche Topologien, wie beispielsweise eine Hochsetzsteller-, Tiefsetzsteller- oder Resonanztopologie. In Verbindung mit bestimmten Steuermustern der Ansteuersignale für die aktiven Halbleiterbauelemente können dabei unterschiedlichste Energieregelungsaufgaben, wie etwa eine Gleichspannungsumsetzung, Wechselspannungserzeugung oder Wechselspannungsgleichrichtung, realisiert werden.

In einigen Betriebsfällen ergeben sich für die aktiven Halbleiter ungünstige Bedingungen, wo diese bedingt durch ihre elektrischen Eigenschaften und der umliegenden elektrischen Beschaltung hohe Verluste während der Einschalt- oder Ausschaltvorgänge erzeugen. In Hochsetzsteller- oder Tiefsetzstellerschaltungen entstehen beispielsweise vor allem beim Einschaltvorgang hohe Verluste, da sowohl die Stromführung als auch die Spannungsform an den Halbleitern, welche für die Aufladung der Speicherinduktivität dienen, keine sogenannten Nullspannungsbedingungen oder stromlose Schaltvorgänge ermöglichen. Diese Verluste führen zu einer signifikanten Wärmeentwicklung und schränken damit die Performance der gesamten elektrischen Schaltung stark ein.

Aus dem Stand der Technik ist beispielsweise durch die DE10 2017 113 697 A1 sowie die US2017/0005563 A1 eine Zusatzbeschaltung für einen Hochsetzsteller bekannt, welche ein antiserielles Schalterpaar sowie eine Induktivität aufweist und welche parallel zu der Speicherinduktivität der Hochsetzstellerschaltung geschaltet ist und durch eine weitere Diode entweder mit dem positiven oder negativen Ausgangsspannungspotenzial der Hochsetzstellerschaltung verbunden ist. Mit dieser Offenbarung kann eine Gleichspannungsumsetzung vorteilhaft durchgeführt werden, jedoch nicht eine Wechselspannungsgleichrichtung.

Eine andere Möglichkeit, die Verluste in einer Gleichspannungsumsetzung zu reduzieren, sind sogenannte resonante Schaltungstopologien, welche einen Schwingkreis aufweisen. Durch einen Betrieb solcher Schaltungen mit einer Frequenz, welche über der Resonanzfrequenz des Schwingkreises liegt, können die Verluste während der Schaltvorgänge deutlich reduziert werden, da zum einen der für die Verluste maßgebliche Strom bereits vor dem Schaltvorgang durch eine üblicherweise intrinsische antiparallel zur aktiven Halbleiterstrecke befindlichen Diode fließt und so zum anderen die Halbleiterspannung während des Schaltvorgangs der Diodenflussspannung entspricht und somit nahezu null ist. Werden solche Schaltungen hingegen mit einer Frequenz betrieben, welche unter der Resonanzfrequenz des Schwingkreises liegt, ergeben sich für die Halbleiter ungünstige Schaltbedingungen, da die antiparallelen Dioden der Halbleiter im Einschaltmoment keinen Strom leiten, sondern die antiparallelen Dioden der jeweils komplementären Halbleiter, welche ausgeschaltet wurden, den Strom weiterführen. Somit resultieren hohe Schaltverluste. Zudem ist eine resonante Schaltungstopologie nicht für jede Energieversorgungsaufgabe technisch oder wirtschaftlich sinnvoll einsetzbar. Beispielsweise kommt für den Anschluss an ein öffentliches Wechsel- oder Drehstromnetz überwiegend die Hochsetzstellertopologie zum Einsatz, welche eine Induktivität und eine Halbbrücke, bestehend aus 2 aktiven Halbleitern, aufweist. Mit bekannten Ansteuer- sowie Regelungsverfahren für diese Topologie weist immer ein Halbleiter hohe Schaltverluste auf. Diese können beispielsweise durch eine bestimmte Auslegung der Induktivität und Schaltfrequenz ebenfalls deutlich reduziert werden, sodass der Strom immer zu Null wird, bevor ein Schaltvorgang ausgeführt wird. Dies erzeugt jedoch sehr hohe schaltfrequente Rippelströme, welche einen erhöhten Filteraufwand oder den Einsatz mehrerer parallel geschalteter und zueinander phasenverschoben angesteuerter Hochsetzsteller zur Einhaltung von normativ definierten Grenzwerten erfordern.

In bestimmten Schaltungstopologien zur Gleichspannungsumwandlung wie beispielsweise der sogenannten Phase-Shifter-Schaltung können die Schaltverluste der Halbleiter durch Totzeitanpassung der Steuersignale reduziert werden, sodass der Halbleiter immer genau dann geschaltet wird, wenn sich während des Kommutierungsvorgangs günstige Schaltbedingungen ergeben, welche strom- und spannungsabhängig sind. Jedoch sind den einstellbaren minimalen Werten für solche Totzeiten entweder bei schaltungstechnischer Lösung Variationsgrenzen gesetzt, oder durch eine per Software realisierte Lösung diskrete Schrittweiten vorgegeben, welche insbesondere bei schnellen dynamischen Vorgängen zu erhöhten Schaltverlusten führen können, da eine entsprechend notwendige schnelle Nachführung der Totzeiten nur im Rahmen der Mess- und Regelfrequenzen möglich ist.

Daher ist es die Aufgabe der vorliegenden Erfindung, die Schaltverluste in Schaltungstopologien zur Gleichspannungsumsetzung mittels Wechselstrom-Zwischenkreis, zur Wechselspannungsgleichrichtung oder Gleichspannungswechselrichtung in Betriebszuständen zu reduzieren, die typischerweise keine günstigen Schaltbedingungen für die aktiven Halbleiter ermöglichen. Diese Aufgabe wird durch die Vorrichtungen sowie Verfahren gemäß dem Haupt- und Nebenansprüchen gelöst. Weitere günstige Ausführungsformen ergeben sich aus den Unteransprüchen.

Vorgeschlagen wird eine Vorrichtung zur Reduktion der Schaltverluste von Halbleiterbauelementen in leistungselektronischen Wandlern. Die Vorrichtung weist zumindest vier Halbleiterbauelemente sowie eine Induktivität auf und wird mit einer leistungselektronischen Schaltung zur Energiewandlung verbunden, wobei zumindest zwei der vier Halbleiterbauelemente als aktive Schaltelemente ausgeführt sind. Im Sinne der Erfindung können die als "Halbleiterbauelement" bezeichneten Gegenstände entweder aktive Halbleiterschalter sein, welche durch entsprechende Steuersignale aktiviert und deaktiviert werden können, oder es können passive Halbleiterventile sein, welche üblicherweise als Dioden bezeichnet werden. Dabei werden ein erstes und ein zweites aktives Halbleiterbauelement und die Induktivität erfindungsgemäß elektrisch miteinander in Reihe geschaltet, wodurch sich eine erste Reihenschaltung ergibt, welche dann elektrisch parallel mit zumindest einer Induktivität der leistungselektronischen Schaltung, insbesondere einer Speicherinduktivität in Hochsetzsteller- oder Tiefsetzstellerschaltungen, verbunden wird. Dabei sind das erste und zweite aktive Halbleiterbauelement zueinander antiseriell geschaltet, sodass ein Stromfluss nur dann stattfindet, wenn zumindest ein aktives Halbleiterbauelement eingeschaltet wird. Weiterhin weist die Vorrichtung zumindest 2 weitere Halbleiterbauelemente auf, die elektrisch in Reihe geschaltet sind und so eine zweite Reihenschaltung bilden, sowie an deren Mittelpunkt mit dem Verbindungspunkt des zweiten aktiven Halbleiterbauelements und der Induktivität der ersten Reihenschaltung der vorgeschlagenen Vorrichtung verbunden sind. Die 2 weiteren Halbleiterbauelemente sind dabei mit einer Halbbrücke der leistungselektronischen Schaltung elektrisch parallel geschaltet, sodass sowohl am positiven als auch am negativen Gleichspannungspotenzial der leistungselektronischen Schaltung zumindest jeweils 1 Halbleiterbauelement der zweiten erfindungsgemäßen Reihenschaltung angeschlossen ist. Diese Ausführungsform kann in vorteilhafter Weise beispielsweise mit einer Schaltung, welche für eine Leistungsfaktorkorrektur an einem Wechselspannungsnetz geeignet ist, verbunden werden. Insbesondere kann die vorgeschlagene Ausführungsform mit einer Hochsetzstellerschaltung, welche zumindest eine Halbbrücke mit 2 aktiven Halbleiterbauelementen aufweist, verbunden werden. Eine sogenannte Delon-Schaltung, welche eine Spannungsverdopplung am Ausgang ermöglicht, weist ebenfalls eine Hochsetzstellerschaltung auf und kann deshalb ebenfalls auf vorteilhafte Weise mit der vorgeschlagenen Vorrichtung verbunden werden. Weitere geeignete Topologien sind die sogenannte Vienna-Gleichrichterschaltung, welche ebenfalls eine Speicherinduktivität sowie eine daran angeschlossene Halbbrücke aufweist. Diese Schaltungen sind zur Leistungsfaktorkorrektur in einphasigen Wechselstromnetzen geeignet. Weiterhin kann die vorgeschlagene Ausführungsform erfindungsgemäß ebenfalls in Schaltungen eingesetzt werden, welche für den Anschluss an ein dreiphasiges Drehstromnetz geeignet sind, beispielsweise in einer sogenannten B6-Schaltung, einer dreiphasigen Vienna-Gleichrichterschaltung oder in einer Matrix-Umrichterschaltung. Hierbei kann die erfindungsgemäße Vorrichtung in dreifacher Ausführung mit diesen leistungselektronischen Schaltungen verbunden werden, indem pro Halbbrücke (pro Phase) eine erfindungsgemäße Schaltung eingesetzt wird.

Die vorgeschlagene Vorrichtung ist in der beschriebenen Verbindung mit einer leistungselektronischen Schaltung in der Lage, einen Strom weiterzuführen, den ein aktives Schaltelement zum Ausschaltzeitpunkt führt, und der durch den Ausschaltvorgang durch dessen intrinsische oder externe antiparallele Diode weiterfließen würde. Dadurch wird vermieden, dass ein komplementäres Schaltelement der leistungselektronischen Schaltung auf eine stromführende Diode einschaltet, wodurch hohe Verluste resultieren würden. Je nach Ausgestaltung der leistungselektronischen Schaltung kann durch die vorgeschlagene Vorrichtung sowie ein vorgeschlagenes Verfahren eine Nullstrom- oder eine Nullspannungsbedingung für das komplementäre Schaltelement herbeigeführt werden. Die durch die vorgeschlagene Vorrichtung erreichte Weiterführung des Stroms führt zudem dazu, dass die Sperrkapazität des auszuschaltenden Halbleiters geladen wird, bevor dieser ausgeschaltet wird, und dass die Sperrkapazität des einzuschaltenden komplementären Halbleiters entladen wird, bevor dieser eingeschaltet wird, sodass für beide Halbleiter in einer Halbbrücke günstige, verlustarme Schaltbedingungen ermöglicht werden. Ein weiterer Vorteil sind die geringeren elektromagnetischen Störaussendungen, da ein strom- oder spannungsloser Schaltvorgang für das betreffende aktive Halbleiterbauelement ermöglicht wird.

Leistungselektronische Schaltungen, mit welchen die vorgeschlagene Vorrichtung in besonders vorteilhafter Weise verbunden werden kann, sind beispielweise Hochsetzsteller- oder Tiefsetzstellerschaltungen, oder eine Kombination aus diesen Schaltungen, wie beispielsweise ein 4-Quadranten-Steller. Die vorgeschlagene Vorrichtung kann aber in unterschiedlichen Ausgestaltungen, welche im Folgenden offenbart werden, auch in resonanten Schaltungstopologien, wie beispielsweise Serienresonanz- oder Parallelresonanzschaltungen, oder einer Kombination aus diesen, eingesetzt werden, wenn diese in ungünstigen Betriebspunkten betrieben werden müssen, beispielsweise unterresonant angesteuert werden. Insbesondere kann die vorgeschlagene Vorrichtung auch in sogenannten LLC-Topologien sowie in phasengesteuerten Spannungswandlertopologien, wie der sogenannten Phase-Shifter-Topologie oder der Dual-Active-Bridge-Topologie, eingesetzt werden.

Eine weitere erfindungsgemäße Einsatzmöglichkeit der vorgeschlagenen Vorrichtung ergibt sich in leistungselektronischen Schaltungen, welche zur Erzeugung von hochfrequenten Wechselspannungen zur Steuerung von elektrischen Maschinen notwendig sind, beispielsweise mehrphasige Synchron- oder Asynchronmotoren. Hier sind pro Phase ebenfalls Halbbrücken zur Erzeugung der Wechselspannungen notwendig, welche in Verbindung mit der Wicklungsinduktivität der Maschinen eine Tiefsetzsteller- oder Vierquadrantenstellerschaltung ergibt.

Es wird außerdem eine Vorrichtung beansprucht, welche eine oder mehrere Hochsetzstellerschaltungen aufweist, wobei zumindest eine Hochsetzstellerschaltung mit der erfindungsgemäßen Vorrichtung nach Anspruch 1 derart verbunden ist, dass die erste Reihenschaltung elektrisch parallel mit der Speicherinduktivität der Hochsetzstellerschaltung verbunden ist und die zweite Reihenschaltung mit zumindest einer Halbbrücke der Hochsetzstellerschaltung elektrisch parallel geschaltet ist.

Weiter wird eine Vorrichtung beansprucht, welche eine oder mehrere Tiefsetzstellerschaltungen aufweist, wobei zumindest eine Tiefsetzstellerschaltung mit der erfindungsgemäßen Vorrichtung nach Anspruch 1 derart verbunden ist, dass die erste Reihenschaltung elektrisch parallel mit der Speicherinduktivität der Tiefsetzstellerschaltung verbunden ist und die zweite Reihenschaltung mit zumindest einer Halbbrücke der Tiefsetzstellerschaltung elektrisch parallel geschaltet ist.

In einer weiteren Ausgestaltung der vorgeschlagenen Vorrichtung weist die zweite Reihenschaltung zumindest 4 Halbleiterbauelemente auf, von denen zumindest 2 als aktive Halbleiterbauelemente ausgeführt sind. Die zumindest 4 weiteren Halbleiterbauelemente sind dabei mit einer Halbbrücke einer leistungselektronischen Schaltung elektrisch parallel geschaltet, wobei zumindest jeweils 2 Halbleiterbauelemente eine Teilschaltung bilden, welche zumindest 1 aktives Halbleiterbauelement aufweist, wobei zumindest 2 Halbleiterbauelemente dieser Teilschaltung elektrisch antiseriell geschaltet sind. Zumindest eine solche Teilschaltung ist dabei zwischen dem Verbindungspunkt der ersten Reihenschaltung zwischen der erfindungsgemäßen Induktivität und den erfindungsgemäßen Halbleitern angebunden und mit dem positiven Potenzial der Gleichspannung der leistungselektronischen Schaltung verbunden, mit welcher auch die Halbleiterbauelemente der leistungselektronischen Schaltung verbunden sind. Weiterhin ist zumindest eine solche Teilschaltung zwischen dem Verbindungspunkt der ersten Reihenschaltung zwischen der erfindungsgemäßen Induktivität und den erfindungsgemäßen Halbleitern angebunden und mit dem negativen Potenzial der Gleichspannung der leistungselektronischen Schaltung verbunden, mit welcher auch die Halbleiterbauelemente der leistungselektronischen Schaltung verbunden sind. Diese Ausführungsform kann in besonders vorteilhafter Weise in der beschriebenen Anordnung beispielsweise mit Resonanzwandlern, insbesondere Systemen zur induktiven Energieübertragung, sowie Phase-Shift-Wandlern oder Dual-Active-Bridge-Wandlern verbunden werden, indem die erfindungsgemäße erste Reihenschaltung mit den beiden Mittelpunkten der 2 Halbbrücken der leistungselektronischen Schaltung verbunden wird, welche üblicherweise die hochfrequente Wechselspannung in DC/DC-Wandlern erzeugen, und die erfindungsgemäße zweite Reihenschaltung mit dem Gleichspannungskreis der leistungselektronischen Schaltung verbunden wird.

Es wird daher eine Vorrichtung beansprucht, welche eine leistungselektronische Schaltung mit zumindest einer Halbbrücke sowie einen Wechselspannungskreis, insbesondere einen LLC-Resonanzkreis oder eine induktive Energieübertragungsvorrichtung mit kapazitiven Kompensationselementen aufweist, welcher mit der erfindungsgemäßen Vorrichtung nach dem vorgenannten Anspruch derart verbunden ist, dass der Wechselspannungskreis, insbesondere der LLC-Resonanzkreis oder die induktive Energieübertragungsvorrichtung mit kapazitiven Kompensationselementen, mit der ersten Reihenschaltung elektrisch parallel geschaltet ist und dass die zweite Reihenschaltung mit zumindest einer Halbbrücke dieser leistungselektronischen Schaltung elektrisch parallel geschaltet ist. Durch diese Konfiguration wird ein verlustarmer Schaltvorgang der Halbleiter in Betriebssituationen ermöglicht, in welchen ohne die vorgeschlagene Vorrichtung verlustintensive Schaltvorgänge resultieren.

Außerdem wird eine Vorrichtung beansprucht, welche eine leistungselektronische Schaltung mit zumindest einer Halbbrücke sowie einen Transformator aufweist, insbesondere ein Phase-Shift- oder Dual-Active-Bridge-Wandler, welcher mit der erfindungsgemäßen Vorrichtung nach dem vorgenannten Anspruch derart verbunden ist, dass der Transformator mit der ersten Reihenschaltung elektrisch parallel geschaltet ist und dass die zweite Reihenschaltung mit zumindest einer Halbbrücke dieser leistungselektronischen Schaltung elektrisch parallel geschaltet ist. Durch diese Konfiguration wird ein verlustarmer Schaltvorgang der Halbleiter in Betriebssituationen ermöglicht, in welchen ohne die vorgeschlagene Vorrichtung verlustintensive Schaltvorgänge resultieren.

In einer vorteilhaften Ausführungsform der Vorrichtung nach den vorangegangenen Ansprüchen, insbesondere den beiden vorangehenden Ansprüchen, welche einen Resonanzwandler oder Wandler ohne Resonanzeigenschaften wie beispielsweise Phase-Shift-Wandler oder DAB-Wandler in Kombination mit Anspruch 4 vorschlagen, besitzt die erfindungsgemäße Induktivität einen Induktivitätswert, der kleiner oder gleich dem Wert ist, der sich ergibt wenn ein bestimmter Stromwert, der einem Kommutierungsstrom der leistungselektronischen Schaltung entspricht, durch Aufladung der erfindungsgemäßen Induktivität in einer vorgegebenen Zeitdauer erreicht werden soll. Die vorgegebene Zeitdauer kann dabei kleiner oder gleich der Totzeit der Steuersignale einer Halbbrücke sein. Als Totzeit ist dabei die Zeitdauer gemeint, in der alle Steuersignale der aktiven Halbleiterbauelemente einer Halbbrücke deaktiviert sind. Dadurch kann zum einen eine minimale Verlustleistung durch minimale Stromführungsdauer in der erfindungsgemäßen ersten und zweiten Reihenschaltung sowie der erfindungsgemäßen Induktivität sichergestellt werden, und zum anderen in der Vorrichtung, welche einen Phase-Shift-Wandler aufweist, die nach Anspruch 15 notwendige kurze Aufladezeit während der Leitend-Phase der antiparallelen bzw. intrinsischen Diode des aktiven Halbleiterbauelements der leistungselektronischen Schaltung welches deaktiviert wurde, ermöglicht werden.

Insbesondere weist der Induktivitätswert nach vorangehendem Anspruch einen Wert auf, der kleiner als 100nH ist. Ein solcher Wert erweist sich in modernen leistungselektronischen Schaltungen mit entsprechend schnell schaltenden aktiven Halbleiterbauelementen als sinnvoller Grenzwert.

In einer weiteren günstigen Ausführungsform der vorangehenden Ansprüche ist die erfindungsgemäße Induktivität ausschließlich durch elektrisch leitende Strukturen, ohne Einsatz von magnetisch aktiven Materialien, realisiert. Dies können beispielsweise Leiterbahnen in Platinen, Luftspulen oder Zuleitungsinduktivitäten von Halbleitern, Kapazitäten oder anderen Induktivitäten sein. Beispielsweise kann eine Anschlussleitung eines für Halbleiter typischen sogenannten TO220- oder TO247-Gehäuses als erfindungsgemäße Induktivität verwendet werden, wenn diese Anschlussleitung am Anfang und am Ende mit den erfindungsgemäßen Halbleitern sowie der jeweiligen leistungselektronischen Schaltung verbunden wird. In gleicher Weise kann auch eine Zuleitung eines Transformators oder einer Resonanz-, Speicher- oder allgemeinen Wechselstrominduktivität als erfindungsgemäße Induktivität angeschlossen werden.

Außerdem wird eine besonders vorteilhafte Ausführungsform der vorgenannten Ausgestaltungen beansprucht, welche dadurch gekennzeichnet ist, dass zumindest ein aktives Halbleiterbauelement der ersten oder zweiten erfindungsgemäßen Reihenschaltung eine geringere Stromtragfähigkeit aufweist als die aktiven Halbleiterbauelemente der leistungselektronischen Schaltung, an welche die vorgeschlagene Vorrichtung angeschlossen wird. Damit kann die gesamte Halbleiterverlustleistung weiter reduziert werden, da aktive Halbleiterbauelemente mit geringerer Stromtragfähigkeit zwar etwas höhere ohmsche Verluste erzeugen, aber gleichzeitig auch durch kleinere Umladekapazitäten deutlich geringere Schaltverluste resultieren.

Eine weitere besonders günstige Ausführungsform der vorgenannten Ausgestaltungen wird vorgeschlagen, welche zumindest ein aktives Halbleiterbauelement in der ersten Reihenschaltung aufweist, welches eine niedrigere Sperrspannungsfähigkeit aufweist als die aktiven Halbleiterbauelemente der leistungselektronischen Schaltung, an welche die vorgeschlagene Vorrichtung angeschlossen wird. Damit können insbesondere leistungselektronische Schaltungen, welche eine Energieregelung zwischen zwei Spannungskreisen mit geringem Spannungsunterschied erfüllen, vorteilhaft ausgeführt werden, da aktive Halbleiterbauelemente mit geringerer Sperrspannungsfähigkeit deutlich kleinere ohmsche Verluste erzeugen und gleichzeitig auch durch kleinere Umladekapazitäten geringere Schaltverluste resultieren.

Vorgeschlagen wird außerdem ein erstes Verfahren zum Betrieb der Vorrichtung nach einem der Ansprüche 1,2,3,9,10 oder 11, welches die Steuersignale der aktiven Halbleiterbauelemente betrifft. Das Steuersignal des ersten aktiven Halbleiterbauelements wird dabei aktiviert, bevor das Schaltelement der leistungselektronischen Schaltung eingeschaltet wird, welches eine Aufladung der Induktivität der leistungselektronischen Schaltung bei positiver Eingangsspannung erwirkt. In einer Hochsetzstellerschaltung ist dies beispielsweise das Schaltelement, welches mit dem negativen Potenzial der Ausgangsspannung verbunden ist. In einer Tiefsetzstellerschaltung ist dies das Schaltelement, welches mit dem positiven Potenzial der Eingangsspannung verbunden ist. Das Steuersignal des zweiten aktiven Halbleiterbauelements wird hingegen bei negativer Eingangsspannung aktiviert, bevor das Schaltelement eingeschaltet wird, welches eine Aufladung der Induktivität erwirkt. Das erfindungsgemäße Steuersignal wird deaktiviert, sobald der Strom durch den auszuschaltenden Halbleiter, welcher eine Entladung der Induktivität der leistungselektronischen Schaltung bewirkt, oder dessen intrinsische oder antiparallele Diode, bis auf Null abgeklungen ist, spätestens nachdem das Steuersignal des jeweiligen aktiven Halbleiterbauelements der leistungselektronischen Schaltung aktiviert worden ist, welches eine Aufladung der Induktivität der leistungselektronischen Schaltung bewirkt. Dabei kann das Steuersignal des Halbleiters, der ausgeschaltet wird und durch dessen intrinsische oder antiparallele Diode nach dem Ausschalten der Strom weiterfließen würde, zum Zeitpunkt der Deaktivierung des erfindungsgemäßen Steuersignals weiterhin aktiv sein.

Durch die erfindungsgemäße Aktivierung der Steuersignale der aktiven Halbleiterbauelemente wird ein Stromfluss durch die erfindungsgemäße Induktivität erwirkt, wodurch der Stromfluss durch den auszuschaltenden Halbleiter der leistungselektronischen Schaltung bzw. dessen intrinsische oder antiparallele Diode bis auf Null reduziert werden kann, bevor das jeweils komplementäre Halbleiterbauelement der leistungselektronischen Schaltung aktiviert wird, welches die Induktivität der leistungselektronischen Schaltung auflädt. Dadurch kann ein verlustbehafteter Kommutierungsvorgang vermieden werden.

Weiter wird ein zweites Verfahren vorgeschlagen, welches die Steuersignale der aktiven Halbleiterbauelemente der Vorrichtung nach einem der Ansprüche 4 bis 11 betrifft. Erfindungsgemäß wird ein Steuersignal eines aktiven Halbleiterbauelements der ersten Reihenschaltung aktiviert, bevor ein aktives Halbleiterbauelement der leistungselektronischen Schaltung deaktiviert wird, durch dessen intrinsische oder antiparallele Diode der Strom weiterfließen würde. Das erfindungsgemäße Steuersignal wird deaktiviert, nachdem das Steuersignal des komplementären aktiven Halbleiterbauelements der leistungselektronischen Schaltung aktiviert worden ist. Die Steuersignale der aktiven Halbleiterbauelemente der zweiten Reihenschaltung werden aktiviert bevor die Steuersignale der aktiven Halbleiterbauelemente der ersten Reihenschaltung deaktiviert werden, und deaktiviert nachdem der Strom durch die erfindungsgemäße Induktivität abgeklungen ist. Dabei korrelieren die Steuersignale der ersten Reihenschaltung mit den Steuersignalen der zweiten Reihenschaltung je nach Polarität des Stromflusses durch den Wechselspannungskreis der leistungselektronischen Schaltung, sodass für eine Polarität jeweils nur ein aktives Schaltelement der ersten und zweiten Reihenschaltung geschaltet werden muss.

Mit diesem erfindungsgemäßen Verfahren wird erwirkt, dass der Stromfluss durch den auszuschaltenden Halbleiter im Ausschaltzeitpunkt nicht in dessen intrinsische oder antiparallele Diode übergeht, sondern in die intrinsische oder antiparallele Diode des komplementären aktiven Halbleiterbauelements kommutiert, wodurch ein verlustarmer Einschaltvorgang ermöglicht wird.

Eine zusätzliche Erweiterung des Verfahrens nach vorangehendem Anspruch wird ebenfalls beansprucht, wonach zumindest eine Totzeit zwischen den Steuersignalen der einzelnen aktiven Halbleiterbauelemente der leistungselektronischen Schaltung soweit verringert wird, dass das komplementäre aktive Halbleiterbauelement eingeschaltet wird, solange dessen intrinsische oder antiparallele Diode durch Anwendung des Verfahrens nach dem vorangegangenen Anspruch Strom führt. Durch diese erweiterte Verfahrensweise können die Schaltverluste in einem möglichst großen Lastbereich, in welchem die unterschiedlichen Resonanzstromstärken zu unterschiedlich langen Leitend-Phasen der intrinsischen bzw. antiparallelen Dioden führen, mit einem minimalen erfindungsgemäßen Induktivitätswert gering gehalten werden.

Außerdem beansprucht wird ein drittes Verfahren zum Betrieb der Vorrichtung nach Anspruch 4 bis 11. Hierbei werden die Steuersignale von zumindest 2 aktiven Halbleiterbauelementen der ersten Reihenschaltung sowie zumindest einem aktiven Halbleiterbauelement der zweiten Reihenschaltung aktiviert, nachdem ein aktives Halbleiterbauelement der leistungselektronischen Schaltung deaktiviert worden ist und bevor dessen komplementäres aktives Halbleiterbauelement aktiviert wird, während die intrinsische oder antiparallele Diode des aktiven Halbleiterbauelements Strom führt, welches deaktiviert wurde. Dabei ist erfindungsgemäß jede beliebige Reihenfolge der Aktivierung der Steuersignale der zumindest 2 aktiven Halbleiterbauelemente der ersten Reihenschaltung sowie der Aktivierung der Steuersignale des zumindest einen aktiven Halbleiterbauelements der zweiten Reihenschaltung ebenso möglich wie eine gleichzeitige Aktivierung eines oder mehrere Steuersignale der betreffenden aktiven Halbleiterbauelemente, ebenso die Aktivierung mehrerer aktiver Halbleiterbauelemente mit demselben Steuersignal. Erfindungsgemäß werden die Steuersignale der ersten Reihenschaltung deaktiviert nachdem das komplementäre aktive Halbleiterbauelement der leistungselektronischen Schaltung aktiviert wurde, und die Steuersignale der zweiten Reihenschaltung werden deaktiviert nachdem die Steuersignale der ersten Reihenschaltung deaktiviert wurden. Eine solche Vorgehensweise ermöglicht eine Reduktion der Einschaltverluste der aktiven Halbleiterbauelemente in einer Phase-Shifter-Schaltung, wenn durch beispielsweise zu große Totzeiten oder schnellen laständerungen die intrinsische bzw. antiparallele Diode des aktiven Halbleiterbauelements, welche deaktiviert wurde, leitend wird und Strom führt. Das vorgeschlagene Verfahren führt in einem solchen Betriebsfall dazu, dass der Strom durch diese Diode zu Null wird und somit deutlich weniger Schaltverluste entstehen.

Die Erfindung wird anhand FIG 1 bis 13 im Folgenden näher erläutert.
FIG 1 zeigt eine Hochsetzsteller-Topologie nach dem Stand der Technik
FIG 2 zeigt eine erste Ausführungsform der vorgeschlagenen Vorrichtung
FIG 3 zeigt eine Hochsetzsteller-Topologie mit einer ersten Ausführungsform der vorgeschlagenen Vorrichtung
FIG 4 zeigt eine zweite Ausführungsform der vorgeschlagenen Vorrichtung
FIG 5 zeigt eine Hochsetzsteller-Topologie mit bipolarer Eingangsspannung zum Betrieb als Leistungsfaktorkorrektur mit einer zweiten Ausführungsform der vorgeschlagenen Vorrichtung
FIG 6 zeigt ein Steuermuster sowie die resultierenden Stromformen der aktiven Halbleiter, welches das erfindungsgemäße erste Verfahren veranschaulicht
FIG 7 zeigt eine dritte Ausführungsform der vorgeschlagenen Vorrichtung
FIG 8 zeigt eine LLC-Resonanztopologie mit einer dritten Ausführungsform der vorgeschlagenen Vorrichtung
FIG 9 zeigt eine dem Stand der Technik entsprechende Stromform durch die aktiven Halbleiter einer LLC-Resonanztopologie
FIG 10 zeigt ein Steuermuster der aktiven Halbleiter, welches das erfindungsgemäße zweite Verfahren sowie die resultierenden Stromformen veranschaulicht
FIG 11 zeigt eine Phase-Shifter-Schaltung mit einer dritten Ausführungsform der vorgeschlagenen Vorrichtung
FIG 12 zeigt eine dem Stand der Technik entsprechende Stromform durch die aktiven Halbleiter einer Phase-Shifter-Schaltung ...
FIG 13 zeigt ein Steuermuster der aktiven Halbleiter, welches das erfindungsgemäße dritte Verfahren sowie die resultierenden Stromformen veranschaulicht ...

Nachfolgend sind gleiche Komponenten mit denselben Bezugszeichen gekennzeichnet.

### Bezugszeichenliste:

1 Eingangsspannung einer leistungselektronischen Schaltung
2 Speicherinduktivität einer leistungselektronischen Schaltung
3 Oberes Schaltelement einer leistungselektronischen Schaltung
4 Unteres Schaltelement einer leistungselektronischen Schaltung
5 Ausgangskapazität einer leistungselektronischen Schaltung
6a Obere Freilaufdiode der erfindungsgemäßen Vorrichtung
6b untere Freilaufdiode der erfindungsgemäßen Vorrichtung
6c oberes aktives Schaltelement der zweiten erfindungsgemäßen Reihenschaltung
6d unteres aktives Schaltelement der zweiten erfindungsgemäßen Reihenschaltung
6e Steuersignal für die aktiven Schaltelemente der zweiten erfindungsgemäßen Reihenschaltung
6 Induktivität der erfindungsgemäßen Vorrichtung
7a Strom durch die Induktivität der erfindungsgemäßen Vorrichtung
8a erstes Halbleiterbauelement der ersten Reihenschaltung der erfindungsgemäßen Vorrichtung
8b zweites Halbleiterbauelement der ersten Reihenschaltung der erfindungsgemäßen Vorrichtung
8c Steuersignal für die aktiven Schaltelemente der ersten erfindungsgemäßen Reihenschaltung
9 Eingangsschaltung einer leistungselektronischen Schaltung zur Leistungsfaktorkorrektur
10a oberes Halbleiterbauelement einer Gleichrichterschaltung
10b unteres Halbleiterbauelement einer Gleichrichterschaltung
11 Steuersignal für die Aufladung (Aufmagnetisierung) der Speicherinduktivität einer leistungselektronischen Schaltung
12 Steuersignal für die synchrone Gleichrichtung (Abmagnetisierung) der Speicherinduktivität einer leistungselektronischen Schaltung
13 Strom durch den Halbleiter zur synchronen Gleichrichtung
14a oberes aktives Halbleiterbauelement der ersten Halbbrücke einer leistungselektronischen Schaltung mit LLC-Resonanzkreis oder eines Phase-Shift-Wandlers
14b oberes aktives Halbleiterbauelement der zweiten Halbbrücke einer leistungselektronischen Schaltung mit LLC-Resonanzkreis oder eines Phase-Shift-Wandlers
14c unteres aktives Halbleiterbauelement der ersten Halbbrücke einer leistungselektronischen Schaltung mit LLC-Resonanzkreis oder eines Phase-Shift-Wandlers
14d unteres aktives Halbleiterbauelement der zweiten Halbbrücke einer leistungselektronischen Schaltung mit LLC-Resonanzkreis oder eines Phase-Shift-Wandlers
15 Resonanzinduktivität eines LLC-Resonanzkreises
15a Strom durch die Resonanzinduktivität
16 Resonanzkapazität eines LLC-Resonanzkreises
17 Hauptinduktivität des Transformators eines LLC-Resonanzkreises oder Phase-Shift-Wandlers18 Gleichrichterschaltung eines LLC-Resonanzkreises oder Phase-Shift-Wandlers
19 Last eines LLC-Resonanzkreises oder Phase-Shift-Wandlers
20 erstes Steuersignal der aktiven Halbleiterbauelemente eines LLC-Resonanzkreises
21 zweites Steuersignal der aktiven Halbleiterbauelemente eines LLC-Resonanzkreises
22 Strom durch ein erstes aktives Halbleiterbauelement eines LLC-Resonanzkreises
23 Strom durch ein zweites aktives Halbleiterbauelement eines LLC-Resonanzkreises
24 optionale Kapazität in einer Phase-Shift-Schaltung
24a erste Möglichkeit der elektrischen Verbindung der erfindungsgemäßen Schaltung mit dem Wechselstromkreis eines Phase-Shift-Wandlers
24b zweite Möglichkeit der elektrischen Verbindung der erfindungsgemäßen Schaltung mit dem Wechselstromkreis eines Phase-Shift-Wandlers
25 Strom durch den Transformator eines Phase-Shift-Wandlers
26 erstes Steuersignal der aktiven Halbleiterbauelemente eines Phase-Shift-Wandlers
27 zweites Steuersignal der aktiven Halbleiterbauelemente eines Phase-Shift-Wandlers
28 Strom durch ein erstes aktives Halbleiterbauelement eines Phase-Shift-Wandlers
29 Strom durch ein zweites aktives Halbleiterbauelement eines Phase-Shift-Wandlers

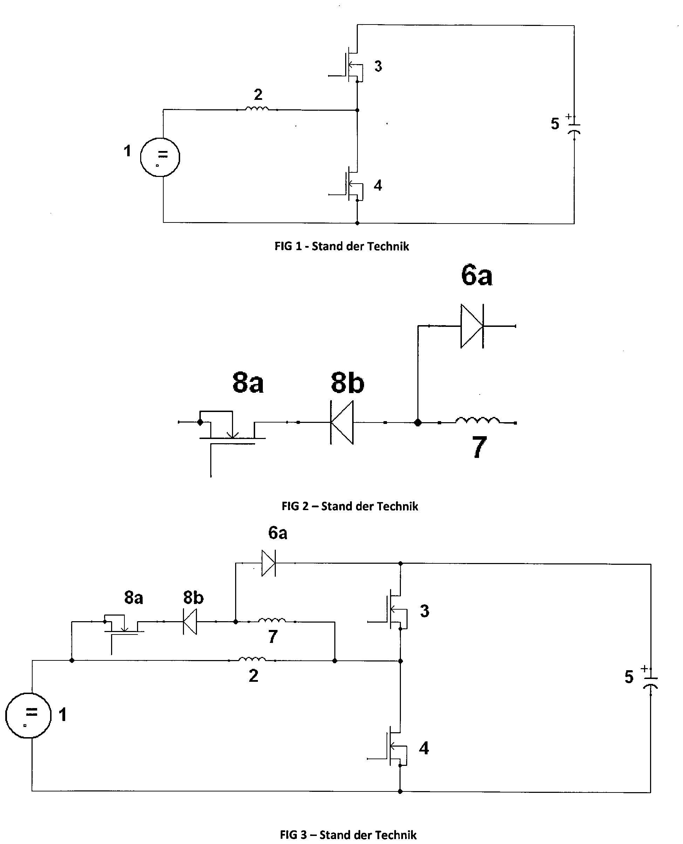

In FIG1 ist eine Hochsetzstellerschaltung nach dem Stand der Technik dargestellt, welche für die Spannungserhöhung von Gleichspannungen geeignet ist. Eine Eingangsgleichspannung (1) ist an eine Speicherinduktivität (2) angeschlossen, welche wiederum mit einer Halbbrücke, bestehend aus einem oberen Schaltelement (3), auch als Highside-Schalter bezeichnet, sowie einem unteren Schaltelement (4), auch als Lowside-Schalter bezeichnet, verbunden ist. An den verbleibenden Anschlüssen der Halbbrücke ist ein Ausgangsspannungskreis, hier dargestellt durch eine Kapazität (5), angeschlossen. Eine typische Energieregelungsaufgabe zur Spannungsanhebung wird durch ein bekanntes Verfahren dadurch gelöst, dass der Lowside-Schalter (4) eingeschaltet wird, wodurch sich ein Strom durch die Speicherinduktivität (2) aufbaut, und der Lowside-Schalter (4) nach einer durch das Eingangs- und Ausgangsspannungsverhältnis sowie dem Wert der Induktivität vorgegebenen Zeitdauer nach dem Einschalten wieder ausgeschaltet wird, wodurch sich der Strom in der Speicherinduktivität (2) über die intrinsische Diode des Highside-Schalters (3) in den Ausgangskreis (5) entlädt und so die Spannung am Ausgang erhöht wird. Während der Leitendphase dieser intrinsischen Diode wird dabei üblicherweise der aktive Halbleiterpfad eingeschaltet, um die Verluste zu reduzieren. Dieses Verfahren wird als synchrone Gleichrichtung bezeichnet. Es sind sowohl frequenzvariable Steuermuster als auch Steuermuster mit konstanter Frequenz bekannt. Zu unterscheiden sind außerdem das sogenannte Konstantstromverfahren, welches einen kontinuierlichen Stromfluss in der Speicherinduktivität (2) erzeugt, sowie das Lückstromverfahren, in welchem der Strom in der Speicherinduktivität (2) in jedem Schaltzyklus komplett zu null abklingt. Das Konstantstromverfahren führt dabei zu einem erhöhten Verlustaufkommen in den Halbleitern, da während des Einschaltvorgangs des Lowside-Schalters (4) der Highside-Schalter (3) bzw. dessen intrinsische Diode noch leitend ist.

FIG2 zeigt eine erste erfindungsgemäße Vorrichtung. Ein erstes aktives Halbleiterbauelement (8a) ist mit einem zweiten Halbleiterbauelement (8b), welches hier als Diode dargestellt ist, antiseriell miteinander verbunden. Daran angeschlossen sind ein weiteres Halbleiterbauelement (6a), hier ebenfalls als Diode dargestellt, sowie eine Induktivität (7), wobei das erste aktive Halbleiterbauelement (8a) mit dem zweiten Halbleiterbauelement (8b) und der Induktivität (7) eine erste Reihenschaltung bildet.

FIG3 zeigt die erste erfindungsgemäße Vorrichtung, welche mit einer Hochsetzstellerschaltung gemäß dem Stand der Technik, wie in FIG1 erläutert, verbunden ist. Dabei wird das erste aktive Halbleiterbauelement (8a) mit dem positiven Potenzial der Eingangsspannung (1) verbunden, sowie das weitere Halbleiterbauelement (6a) mit dem positiven Potenzial der Ausgangsspannung (5) verbunden, sowie die Induktivität (7) mit dem Mittelpunkt der Halbbrücke sowie der Speicherinduktivität (2) verbunden. Eine vertauschte Anordnung des ersten aktiven Halbleiterbauelements (8a) mit dem zweiten Halbleiterbauelement (8b) ist dabei ebenso möglich und als erfindungsgemäß zu bewerten.

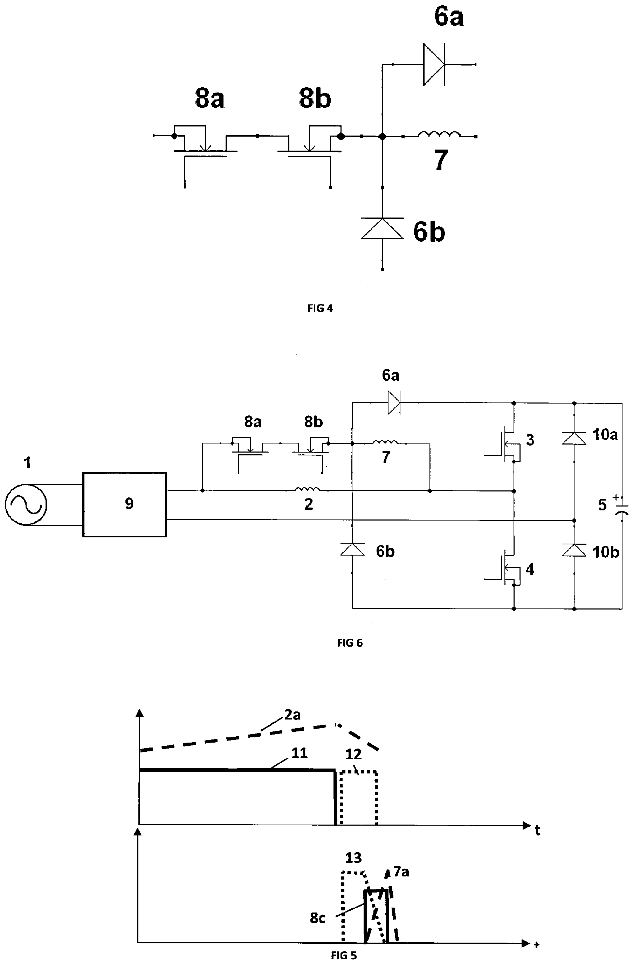

FIG4 zeigt eine zweite erfindungsgemäße Vorrichtung, welche zusätzlich zur ersten erfindungsgemäßen Vorrichtung aus FIG2 ein weiteres Halbleiterbauelement (6b) aufweist, hier als Diode dargestellt, das mit dem weiteren Halbleiterbauelement (6a) eine zweite Reihenschaltung bildet und mit der Induktivität (7) sowie dem zweiten Halbleiterbauelement (8b) der ersten Reihenschaltung verbunden ist, wobei das zweite Halbleiterbauelement (8b) der ersten Reihenschaltung als aktives Halbleiterbauelement ausgeführt ist.

FIG5 zeigt die zweite erfindungsgemäße Vorrichtung, welche mit einer Hochsetzstellerschaltung verbunden ist, die als Energieregelungsaufgabe die Leistungsfaktorkorrektur an einem Wechselspannungsnetz (1) hat. Diese Schaltung weist üblicherweise eine zusätzliche Halbbrücke (10a, 10b) auf, welche zur Gleichrichtung der Wechselspannung notwendig ist und welche sowohl mit Dioden als auch mit aktiven Halbleiterbauelementen ausgeführt sein kann. Üblicherweise ist in Schaltungen zur Leistungsfaktorkorrektur eine Filterbeschaltung (9) im Wechselspannungskreis erforderlich, um gültige Normen zur leitungsgebundenen Störaussendung einzuhalten. Dabei wird das erste aktive Halbleiterbauelement der erfindungsgemäßen Vorrichtung (8a) mit einem Anschluss der Eingangsspannung (1) verbunden, sowie das weitere Halbleiterbauelement (6a) mit dem positiven Potenzial der Ausgangsspannung (5) verbunden, sowie die Induktivität (7) mit dem Mittelpunkt der Halbbrücke sowie der Speicherinduktivität (2) verbunden, sowie das weitere Halbleiterbauelement (6b) mit dem negativen Potenzial der Ausgangsspannung verbunden. Eine vertauschte Anordnung des ersten aktiven Halbleiterbauelements (8a) mit dem zweiten Halbleiterbauelement (8b) ist dabei ebenso möglich und als erfindungsgemäß zu bewerten.

FIG6 veranschaulicht ein Steuermuster sowie die resultierenden Stromformen gemäß dem ersten erfindungsgemäßen Verfahren, welches am Beispiel einer Hochsetzstellerschaltung im Konstantstromverfahren, welche die erfindungsgemäße Vorrichtung aufweist, erläutert wird. Die Steuersignale (11) des unteren aktiven Halbleiterbauelements (4) sowie (12) des oberen Halbleiterbauelements (3) der Hochsetzstellerschaltung führen zu einem kontinuierlichen Stromfluss (2a) durch die Speicherinduktivität (2), wobei der Strom (2a) bei positiver Polarität der Eingangsspannung (1) und aktiviertem unteren Halbleiterbauelement (4) ansteigt, und bei deaktiviertem unteren Halbleiterbauelement (4) über die intrinsische Diode des oberen Halbleiterbauelements (3), oder bei aktiviertem oberen Halbleiterbauelement (3) direkt durch den aktiven Halbleiter fließt. Sobald das untere Halbleiterbauelement (4) wieder eingeschaltet wird, steigt der Strom (2a) durch die Speicherinduktivität (2) wieder an. In diesem Moment muss der Strom durch den oberen Halbleiter (3), der durch die intrinische Diode weiterfließt, unter hohen Schaltverlusten auf den unteren Halbleiter (4) kommutiert werden. Das erfindungsgemäße erste Verfahren aktiviert das erste aktive Halbleiterbauelement (8a) mit dem Steuersignal (8c), wodurch ein Stromfluss (7a) in der Induktivität (7) aufgebaut wird, welcher über das zweite Halbleiterbauelement (8b) sowie das erste Halbleiterbauelement (8a) sowie die Speicherinduktivität (2) fließt und so der Stromfluss (13) im oberen Halbleiterbauelement (3) abgebaut wird. Sobald der Stromfluss (13) im oberen Halbleiterbauelement (3) bis auf null abgesunken ist, kann das Steuersignal (8c) des ersten aktiven Halbleiters (8a) gemäß dem ersten erfindungsgemäßen Verfahren wieder deaktiviert werden. Dadurch fließt der Strom (2a) über das weitere Halbleiterbauelement (6a) in den Ausgangskreis (5) und sinkt bis auf null ab. Durch die dargestellte Stromform (13) durch den oberen Halbleiter (3) kann erkannt werden, dass der untere aktive Halbleiter (4) im Einschaltmoment keinen Strom aus dem oberen Halbleiter (3) mehr übernehmen muss, wodurch deutlich weniger Verluste resultieren.

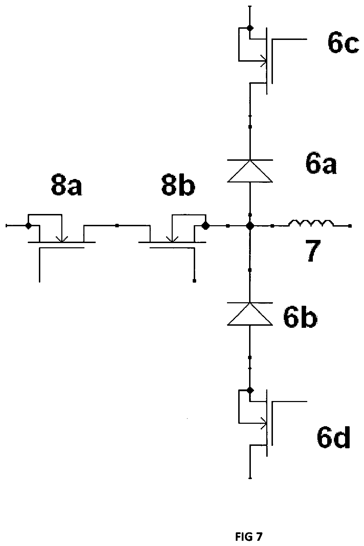

FIG7 zeigt eine dritte Ausführungsform der erfindungsgemäßen Vorrichtung, in welcher die zweite Reihenschaltung 4 Halbleiter (6a,6b,6c,6d) aufweist, wobei jeweils ein aktives Halbleiterbauelement (6c,6d) mit jeweils einem weiteren Halbleiterbauelement (6a,6b) antiseriell geschaltet ist, und diese antiseriellen Teilschaltungen miteinander sowie mit der Induktivität (7) und dem zweiten aktiven Halbleiterbauelement (8b) der ersten Reihenschaltung der erfindungsgemäßen Vorrichtung verbunden sind. Eine vertauschte Anordnung des ersten aktiven Halbleiterbauelements (8a) mit dem zweiten Halbleiterbauelement (8b) sowie der jeweiligen Halbleiter(6a,6b,6c,6d) der antiseriellen Teilschaltungen der zweiten Reihenschaltung ist dabei ebenso möglich und als erfindungsgemäß zu bewerten.

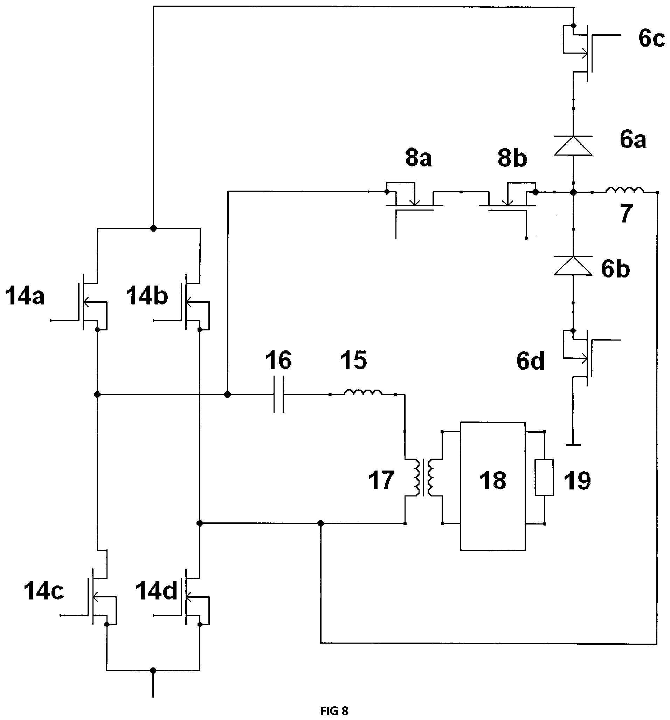

FIG8 zeigt eine elektrische Schaltung eines LLC-Resonanzkreises, welcher auch als repräsentative Schaltung für ein seriell kompensiertes induktives Energieübertragungssystem betrachtet werden kann. Ein Resonanzkreis, bestehend aus einer Kapazität (16), einer ersten Induktivität (15) sowie einer zweiten Induktivität (17) ist an eine Vollbrücke, bestehend aus 4 aktiven Halbleiterbauelementen (14a,14b,14c,14d), angeschlossen. Dabei ist die zweite Induktivität (17) üblicherweise die Wicklungsinduktivität eines Transformators. In einem System zur induktiven Energieübertragung ist die zweite Induktivität (17) die Hauptinduktivität der Übertragerspule, und die erste Induktivität (15) stellt den Streuanteil der Übertragerspulen dar. Der Transformator (17) bzw. die Empfängerspule eines induktiven Energieübertragungssystems ist mit einer Gleichrichterschaltung (18) verbunden, welche mit einer Last (19) verbunden ist. Die dritte erfindungsgemäße Vorrichtung ist mit dem LLC-Resonanzkreis verbunden, wobei das erste aktive Halbleiterbauelement (8a) mit dem Mittelpunkt der ersten Halbbrücke (14a, 14c) und die Induktivität (7) mit dem Mittelpunkt der zweiten Halbbrücke (14b,14d) der Vollbrückenschaltung verbunden ist. Weiterhin ist die zweite Reihenschaltung der dritten erfindungsgemäßen Vorrichtung parallel mit der Vollbrückenschaltung verbunden.

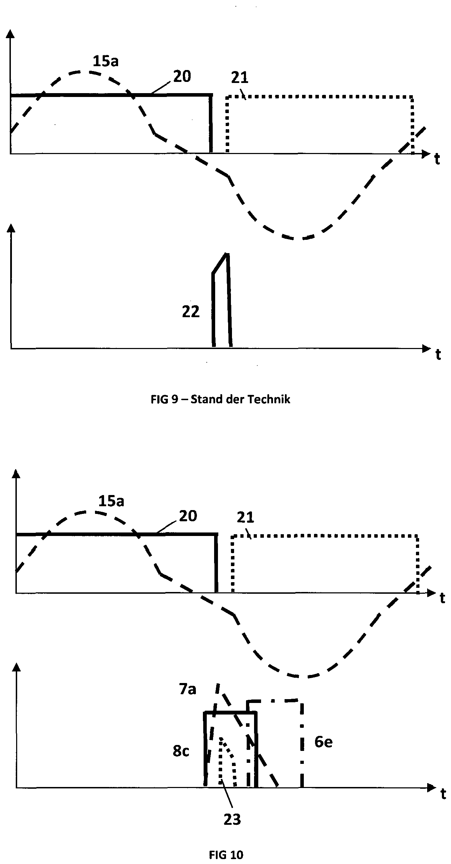

FIG9 zeigt die Steuersignale (20,21) der beiden Brückendiagonalen mit den zugehörigen aktiven Halbleitern (14a,14d) bzw. (14b,14c), wie sie üblicherweise in einem Verfahren zur Energieübertragung in LLC-Resonanzkreise sowie zur induktiven Energieübertragung eingesetzt werden. Die Stromform (15a) im Resonanzkreis ist dabei das Resultat einer Ansteuerung der beiden Brückendiagonalen (14a, 14d) bzw. (14b, 14c) für den Fall, dass die Ansteuerfrequenz unterhalb der Resonanzfrequenz des LLC-Resonanzkreises bzw. der induktiven Übertragungsstrecke liegt, welche aus der Summe der beiden Induktivitäten (15, 17) sowie der Kapazität (16) des LLC-Resonanzkreises bzw. der induktiven Übertragungsstrecke resultiert. In diesem Fall wechselt der Strom (15a) die Polarität, bevor die Steuersignale (20,21) der beiden Brückendiagonalen zu einem Polaritätswechsel der anregenden Wechselspannung des LLC-Resonanzkreises bzw. der induktiven Übertragungsstrecke führen. Als Folge daraus fließt der Strom (22) nach der Deaktivierung eines Steuersignals (20) für eine Brückendiagonale durch die intrinsischen Dioden der zugehörigen Halbleiter (14a,14d), wodurch die darauf folgend durch Aktivierung der entsprechenden Steuersignale (21) einer Brückendiagonale zugehörigen Halbleiter (14b,14c) auf die stromführenden intrinsischen Dioden der jeweils komplementären Halbleiter (14a, 14d) der einzelnen Halbbrücken einschalten und diesen Strom übernehmen, wodurch hohe Verluste entstehen.

FIG10 stellt die Steuersignale sowie die resultierenden Stromverläufe in der Schaltung nach FIG8 dar, wenn das erfindungsgemäße zweite Verfahren eingesetzt wird. Bei positiver Polarität der am LLC-Resonanzkreis bzw. der induktiven Übertragungsstrecke anliegenden Wechselspannung, welche in der Darstellung in FIG10 durch die Aktivierung der Brückendiagonale (14a,14d) erzeugt wird, wird das zweite Halbleiterbauelement (8b) der ersten erfindungsgemäßen Reihenschaltung mit dem Steuersignal (8c) aktiviert, wodurch der Strom (7a) durch die erfindungsgemäße Induktivität (7) ansteigt, und der Strom durch den auszuschaltenden Halbleiter entsprechend dem Stromanstieg (7a) in der Induktivität (7) ebenfalls ansteigt, wodurch der Polaritätswechsel noch vor dem Ausschalten der entsprechenden Halbleiter der Brückendiagonale (14a,14d) rückgängig gemacht bzw. ganz vermieden wird. Eine Aktivierung des Steuersignals (8c) kann dabei durch Detektion des Polaritätswechsels des Resonanzstroms (15a) erfolgen, oder auch durch eine entsprechend große, fest gewählte Zeitdauer vor der Deaktivierung des Steuersignals (20) für die aktiven Halbleiter (14a,14d) der Brückendiagonale festgelegt sein. Dadurch wird nach der Deaktivierung des Steuersignals (20) der aktiven Halbleiter (14a,14d) der Brückendiagonale automatisch in die intrinsischen Dioden der aktiven Halbleiter (14b,14c) kommutieren und zu einem Stromfluss (23) in diesen Halbleitern führen, bevor deren Steuersignal (21) aktiviert wird. Dadurch kann mit dem vorgeschlagenen zweiten Verfahren und der vorgeschlagenen dritten Ausführungsform der erfindungsgemäßen Vorrichtung eine Nullspannungs-Schaltbedingung für die Halbleiter der Vollbrücke erreicht werden, welche ansonsten unter diesen Betriebsbedingungen hohe Verluste durch Schaltvorgänge auf stromführende Dioden erzeugen würden. Das erfindungsgemäße Steuersignal (6e) der zweiten Reihenschaltung wird dabei für den gezeigten Fall bei zunächst positiver Polarität der anregenden Wechselspannung auf das untere aktive Schaltelement (6d) der zweiten Reihenschaltung appliziert, wobei das Steuersignal (6e) nach der Aktivierung der Steuersignale (21) der Brückendiagonalen mit den Halbleitern (14b,14c), welche eine negative Polarität der anregenden Wechselspannung herbeiführen, aktiviert wird. Dadurch kann der Strom (7a) in der Induktivität (7) wieder zu null absinken. Sobald das Steuersignal (6e) aktiviert wurde, kann gemäß dem erfindungsgemäßen zweiten Verfahren des Steuersignal (8c) deaktiviert werden. Durch diese Abfolge wird sichergestellt, dass der Strom (7a) durch die Induktivität (7) weiterfließen kann und keine unkontrollierten hohen Spannungen durch Stromabriss entstehen. Sobald der Strom (7a) durch die Induktivität (7) zu null abgesunken ist kann das Steuersignal (6e) wieder deaktiviert werden. Die gezeigte Abfolge der erfindungsgemäßen Steuersignale (8c,6e) in Relation zu den Steuersignalen (20,21) für die Vollbrücke wird bei anliegender negativer anregender Wechselspannung auf die jeweils anderen aktiven Halbleiter der erfindungsgemäßen Reihenschaltungen (Steuersignal (8c) auf Halbleiter (8a) sowie Steuersignal (6e) auf Halbleiter (6c)) angewendet, wodurch sich ein negativer Stromverlauf (7a) in der Induktivität (7) ergibt.

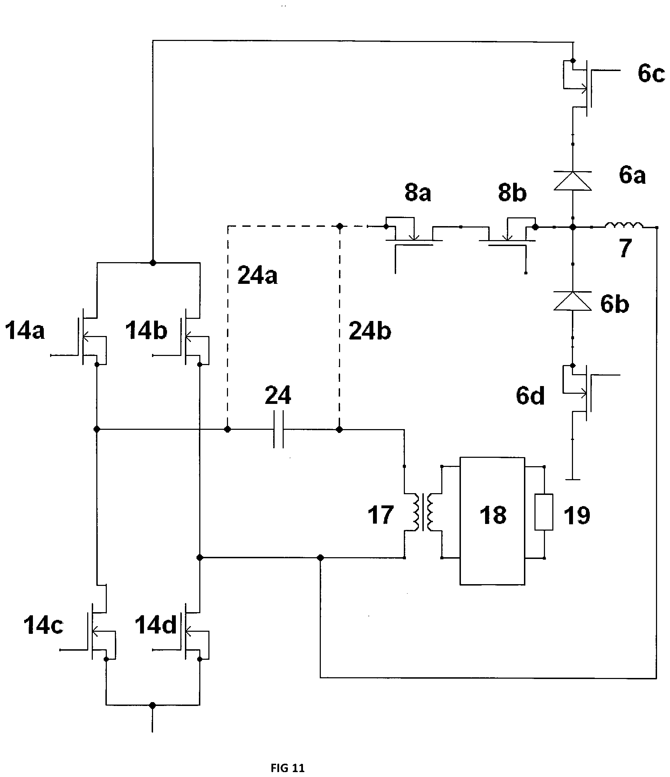

FIG11 zeigt eine elektrische Schaltung eines Phase-Shift-Wandlers. Ein Wechselstromkreis, bestehend aus einer optionalen Kapazität (24), welche nicht zwingend zur Energiewandlung vorhanden sein muss sowie einer zweiten Induktivität (17) ist an eine Vollbrücke, bestehend aus 4 aktiven Halbleiterbauelementen (14a,14b,14c,14d), angeschlossen. Dabei ist die zweite Induktivität (17) üblicherweise die Wicklungsinduktivität eines Transformators. Der Transformator (17) ist mit einer Gleichrichterschaltung (18) verbunden, welche mit einer Last (19) verbunden ist. Die dritte erfindungsgemäße Vorrichtung ist mit dem Phase-Shift-Wandler verbunden, wobei das erste aktive Halbleiterbauelement (8a) wahlweise entweder (24a) mit dem Mittelpunkt der ersten Halbbrücke (14a, 14c) oder (24b) mit der Verbindung zwischen der optionalen Kapazität (24) und dem Transformator (17) verbunden ist und die Induktivität (7) mit dem Mittelpunkt der zweiten Halbbrücke (14b,14d) der Vollbrückenschaltung verbunden ist. Weiterhin ist die zweite Reihenschaltung der dritten erfindungsgemäßen Vorrichtung parallel mit der Vollbrückenschaltung verbunden.

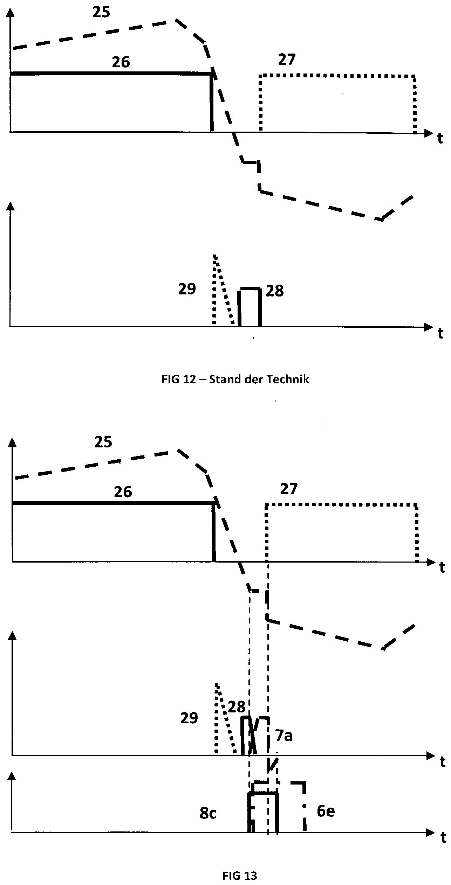

FIG12 zeigt die Steuersignale (26,27) in einer Halbbrücke mit den zugehörigen aktiven Halbleitern (14a, 14c) bzw. (14b, 14d), wie sie üblicherweise in einem Verfahren zur Energieübertragung in Phase-Shift-Wandlern eingesetzt werden. Die Stromform (25) im Wechselstromkreis ist dabei das Resultat einer Ansteuerung der beiden Brückendiagonalen (14a, 14d) bzw. (14b, 14c). Der Strom (25) fließt nach Deaktivierung des ersten Steuersignals (26) eines ersten Halbleiterbauelements in einer Halbbrücke (14a, 14b) weiterhin in dieselbe Richtung und führt dazu, dass eine Kommutierung in eine antiparallele bzw. intrinsische Diode des zweiten aktiven Halbleiterbauelements derselben Halbbrücke (14c, 14d) stattfindet, wodurch diese einen Strom (29) führt und das zweite aktive Halbleiterbauelement (14c, 14d) damit verlustarm durch Aktivierung des Steuersignals (27) eingeschaltet werden kann. Die FIG12 zeigt jedoch den Fall, dass durch eine zu große Totzeit zwischen den beiden Steuersignalen (26, 27) die Polarität des Stroms (25) wechselt, bevor das zweite Steuersignal (27) aktiviert wird. Als Folge daraus führt nun eine antiparallele oder intrinsische Diode des ersten aktiven Halbleiterbauelements (14a, 14b) Strom (28), dessen Form aufgrund der vorherrschenden Spannungsbeanspruchungen am Wechselstromkreis durch ein typisches Phase-Shift-Steuermuster nahezu gleichbleibend ist. Wird nun das Steuersignal (27) des zweiten aktiven Halbleiterbauelements in der entsprechenden Halbbrücke (14c, 14d) aktiviert, erfolgt ein Einschaltvorgang mit hohen Verlusten, da der Strom von der antiparallelen bzw. intrinsischen Diode des ersten aktiven Halbleiterbauelements der jeweiligen Halbbrücke (14a, 14b) unter maximaler Betriebsspannung übernommen werden muss. Selbstverständlich gelten alle Ausführungen mit umgekehrter Polarität der Stromform (25) sowie vertauschten Rollen der Steuersignale (26, 27) der zugehörigen aktiven Halbleiterbauelemente (14a, 14b, 14c, 14d) entsprechend.

FIG13 stellt die Steuersignale sowie die resultierenden Stromverläufe in der Schaltung nach FIG11 dar, wenn das erfindungsgemäße dritte Verfahren eingesetzt wird. Sobald die Polarität des Wechselstroms (25) während der Totzeit, in welcher beide Steuersignale (26, 27) deaktiviert sind, wechselt, werden beide aktiven Halbleiterbauelemente (8a, 8b) der ersten erfindungsgemäßen Reihenschaltung mit dem Steuersignal (8c) aktiviert, wodurch der Strom (7a) durch die erfindungsgemäße Induktivität (7) ansteigt, und der Strom (28) durch die antiparallele bzw. intrinsische Diode des ausgeschalteten Halbleiters (14a, 14b) entsprechend dem Stromanstieg (7a) in der Induktivität (7) bis auf Null absinkt, wodurch das zweite aktive Halbleiterbauelement (14c, 14d) durch Aktivierung des zweiten Steuersignals (27) dann stromlos und damit verlustarm eingeschaltet werden kann. Eine Aktivierung des Steuersignals (8c) kann dabei durch Detektion des Polaritätswechsels des Wechselstroms (25) erfolgen, oder auch durch eine entsprechend große, fest gewählte Zeitdauer nach der Deaktivierung des Steuersignals (26) für die ersten aktiven Halbleiter (14a,14b) einer Halbbrücke festgelegt sein. Somit kann mit dem vorgeschlagenen dritten Verfahren und der vorgeschlagenen dritten Ausführungsform der erfindungsgemäßen Vorrichtung eine verlustarme Schaltbedingung für die Halbleiter der Vollbrücke erreicht werden, welche ansonsten unter diesen Betriebsbedingungen hohe Verluste durch Schaltvorgänge auf stromführende Dioden erzeugen würden. Das erfindungsgemäße Steuersignal (6e) der zweiten Reihenschaltung wird dabei für den gezeigten Fall bei zunächst positiver Polarität des Wechselstroms (25) auf das untere aktive Schaltelement (6d) der zweiten Reihenschaltung appliziert, wobei das Steuersignal (6e) gleichzeitig mit oder nach der Aktivierung des Steuersignals (8c) der ersten erfindungsgemäßen Reihenschaltung aktiviert wird. Dadurch kann der Strom (7a) in der Induktivität (7) wieder zu null absinken, sobald das zweite Steuersignal (27) aktiviert und das Steuersignal (8c) der ersten Reihenschaltung wieder deaktiviert wurde. Hierbei fließt während der gleichzeitig aktiven Phasen der beiden Steuersignale (27, 8c) ein sehr hoher Strom (7a) mit umgekehrter Polarität durch die erfindungsgemäße Induktivität (7), was durch eine möglichst gleichzeitige Deaktivierung des Steuersignals (26) der ersten Reihenschaltung mit der Aktivierung des zweiten Steuersignals (27) verhindert werden kann. Sobald der Strom (7a) durch die Induktivität (7) zu null abgesunken ist kann das Steuersignal (6e) wieder deaktiviert werden. Selbstverständlich gelten alle Ausführungen mit umgekehrter Polarität der Stromform (25) sowie vertauschten Rollen der Steuersignale (26, 27) der zugehörigen aktiven Halbleiterbauelemente (14a, 14b, 14c, 14d) entsprechend, wobei das erfindungsgemäße Steuersignal (8c) der ersten Reihenschaltung in Relation zu den Steuersignalen (26,27) für eine Halbbrücke bei negativer Polarität des Wechselstroms (25) ebenfalls auf beide aktiven Halbleiter der erfindungsgemäßen ersten Reihenschaltung angewendet wird und das Steuersignal (6e) auf Halbleiter (6c) angewendet wird, wodurch sich ein negativer Stromverlauf (7a) in der Induktivität (7) ergibt.

## Patentansprüche

1. Vorrichtung zur Reduktion der Schaltverluste von Halbleiterbauelementen in leistungselektronischen Wandlern, **dadurch gekennzeichnet, dass** zumindest ein erstes aktives Halbleiterbauelement (8a) mit zumindest einem zweiten aktiven Halbleiterbauelement (8b) und einer Induktivität (7) eine erste Reihenschaltung bildet, wobei das erste und zweite Halbleiterbauelement (8a, 8b) zueinander antiseriell geschaltet sind, und diese Reihenschaltung elektrisch parallel mit zumindest einer Induktivität (2) einer leistungselektronischen Schaltung verbunden ist, wobei am Verbindungspunkt zwischen dem zweiten Halbleiterbauelement (8b) und der Induktivität (7) der vorgeschlagenen Vorrichtung zumindest zwei weitere Halbleiterbauelemente (6a, 6b) mit jeweils einem Anschluss elektrisch angeschlossen sind, wodurch eine zweite Reihenschaltung resultiert.

2. Vorrichtung nach Anspruch 1, welche eine oder mehrere Hochsetzstellerschaltungen aufweist, **dadurch gekennzeichnet, dass** zumindest eine Hochsetzstellerschaltung mit der erfindungsgemäßen Vorrichtung derart verbunden ist, dass die erste Reihenschaltung elektrisch parallel mit der Speicherinduktivität (2) der Hochsetzstellerschaltung verbunden ist und die zweite Reihenschaltung mit zumindest einer Halbbrücke der Hochsetzstellerschaltung elektrisch parallel geschaltet ist.

3. Vorrichtung nach Anspruch 1, welche eine oder mehrere Tiefsetzstellerschaltungen aufweist, **dadurch gekennzeichnet, dass** zumindest eine Tiefsetzstellerschaltung mit der erfindungsgemäßen Vorrichtung derart verbunden ist, dass die erste Reihenschaltung elektrisch parallel mit der Speicherinduktivität (2) der Tiefsetzstellerschaltung verbunden ist und die zweite Reihenschaltung mit zumindest einer Halbbrücke der Tiefsetzstellerschaltung elektrisch parallel geschaltet ist.

4. Vorrichtung nach Anspruch 1, **dadurch gekennzeichnet, dass** die zweite Reihenschaltung zumindest 4 Halbleiterbauelemente (6a, 6b, 6c, 6d) aufweist, wobei zumindest 2 dieser Halbleiterbauelemente als aktive Schalter (6c, 6d) ausgeführt sind und jeweils ein aktives Halbleiterbauelement (6c, 6d) mit einem weiteren Halbleiterbauelement (6a, 6b) antiseriell geschaltet ist.

5. Vorrichtung nach Anspruch 4, **dadurch gekennzeichnet, dass** die erste Reihenschaltung elektrisch parallel zu einem Wechselspannungskreis einer leistungselektronischen Schaltung geschaltet ist und die zweite Reihenschaltung elektrisch parallel mit zumindest einer Halbbrücke dieser leistungselektronischen Schaltung geschaltet ist.

6. Vorrichtung nach Anspruch 4, **dadurch gekennzeichnet, dass** die erste Reihenschaltung elektrisch parallel zu einem Transformator (17) einer leistungselektronischen Schaltung geschaltet ist und die zweite Reihenschaltung elektrisch parallel mit zumindest einer Halbbrücke dieser leistungselektronischen Schaltung geschaltet ist.

7. Vorrichtung nach Anspruch 5 oder 6, **dadurch gekennzeichnet, dass** die Induktivität (7) einen Wert besitzt, der kleiner oder gleich dem Wert ist, der sich ergibt wenn ein bestimmter Stromwert, der einem Kommutierungsstrom der leistungselektronischen Schaltung entspricht, durch Aufladung der Induktivität (7) in einer vorgegebenen Zeitdauer erreicht werden soll.

8. Vorrichtung nach Anspruch 7, **gekennzeichnet durch** einen Induktivitätswert von weniger als 100 Nanohenry.

9. Vorrichtung nach Anspruch 1 bis 8, **dadurch gekennzeichnet, dass** die Induktivität (7) ausschließlich durch elektrisch leitende Strukturen erzeugt wird.

10. Vorrichtung nach Anspruch 1 bis 9, **dadurch gekennzeichnet, dass** zumindest ein aktives Halbleiterbauelement (8a, 8b, 6c, 6d) der ersten oder zweiten erfindungsgemäßen Reihenschaltung eine geringere Stromtragfähigkeit aufweist als die aktiven Halbleiterbauelemente (14a, 14b, 14c, 14d) der leistungselektronischen Schaltung, an welche die vorgeschlagene Vorrichtung angeschlossen wird.

11. Vorrichtung nach Anspruch 1 bis 10, **dadurch gekennzeichnet, dass** zumindest ein aktives Halbleiterbauelement (8a, 8b) in der ersten Reihenschaltung eine niedrigere Sperrspannungsfähigkeit aufweist als die aktiven Halbleiterbauelemente (14a, 14b, 14c, 14d) der leistungselektronischen Schaltung, an welche die vorgeschlagene Vorrichtung angeschlossen wird.

12. Verfahren zum Betrieb der Vorrichtung nach einem der Ansprüche 1,2,3,9,10 oder 11, **dadurch gekennzeichnet, dass** zumindest ein aktives Halbleiterbauelement (8a, 8b) der ersten Reihenschaltung eingeschaltet wird, bevor das Schaltelement (3, 4) der leistungselektronischen Schaltung eingeschaltet wird, welches eine Aufladung der Induktivität (2) der leistungselektronischen Schaltung erwirkt, und dass das aktive Halbleiterbauelement (8a, 8b) wieder ausgeschaltet wird, nachdem der Strom (2a) durch den auszuschaltenden Halbleiter (3, 4) der leistungselektronischen Schaltung, welches eine Entladung der Induktivität (2) der leistungselektronischen Schaltung bewirkt, abgeklungen ist.

13. Verfahren zum Betrieb der Vorrichtung nach Anspruch 4 bis 11, **dadurch gekennzeichnet, dass** ein Steuersignal (8c) zumindest eines aktiven Halbleiterbauelements (8a, 8b) der ersten Reihenschaltung aktiviert wird, bevor ein aktives Halbleiterbauelement (14a, 14b, 14c, 14d) der leistungselektronischen Schaltung deaktiviert wird, durch dessen intrinsische oder antiparallele Diode der Strom weiterfließen würde; dass das Steuersignal (8c) deaktiviert wird, nachdem das Steuersignal (21) des komplementären aktiven Halbleiterbauelements der leistungselektronischen Schaltung aktiviert worden ist; dass das Steuersignal (6e) zumindest eines aktiven Halbleiterbauelements (6c, 6d) der zweiten Reihenschaltung aktiviert wird bevor das Steuersignal (8c) des aktiven Halbleiterbauelements (8a, 8b) der ersten Reihenschaltung deaktiviert wird, und dass das Steuersignal (6e) des aktiven Halbleiterbauelements (6c, 6d) der zweiten Reihenschaltung deaktiviert wird nachdem der Strom (7a) durch die erfindungsgemäße Induktivität (7) abgeklungen ist.

14. Verfahren nach Anspruch 13, **dadurch gekennzeichnet, dass** zumindest eine Totzeit zwischen den Steuersignalen (20, 21) der leistungselektronischen Schaltung reduziert wird, sodass die aktiven Halbleiterbauelemente (14a, 14b, 14c, 14d) der leistungselektronischen Schaltung eingeschaltet werden, solange ein Stromfluss durch deren intrinsische oder antiparallele Diode vorhanden ist.

15. Verfahren zum Betrieb der Vorrichtung nach Anspruch 4 bis 11, **dadurch gekennzeichnet, dass** zumindest 2 aktive Halbleiterbauelementen (8a, 8b) der ersten Reihenschaltung sowie zumindest ein aktives Halbleiterbauelement (6c, 6d) der zweiten Reihenschaltung aktiviert werden, nachdem ein aktives Halbleiterbauelement (14a, 14b, 14c, 14d) der leistungselektronischen Schaltung deaktiviert worden ist und bevor dessen komplementäres aktives Halbleiterbauelement aktiviert wird, während die intrinsische oder antiparallele Diode des aktiven Halbleiterbauelements Strom führt, welches deaktiviert wurde, und dass die aktiven Halbleiterbauelemente (8a, 8b) der ersten Reihenschaltung deaktiviert werden nachdem das komplementäre aktive Halbleiterbauelement der leistungselektronischen Schaltung aktiviert wurde, und dass die aktiven Halbleiterbauelemente (6c, 6d) der zweiten Reihenschaltung deaktiviert werden nachdem die aktiven Halbleiterbauelemente (8a, 8b) der ersten Reihenschaltung deaktiviert wurden.
